# EUROPEAN PATENT SPECIFICATION

(11) **EP 1 357 094 B1**
(45) Date of publication and mention of the grant of the patent: **05.08.2009**
(21) Application number: 01902426.4
(22) Date of filing: 26.01.2001
(51) Int. Cl.: C04B 35/18, C04B 35/66

(54) **REFRACTORY MATERIAL FOR CEMENT INDUSTRY KILNS AND USE THEREOF**
FEUERFESTE KERAMIK FÜR ZEMENTINDUSTRIEÖFEN UND VERWENDUNG DERSELBEN
MATERIAU REFRACTAIRE POUR FOURS A CIMENT ET UTILISATION DUDIT MATERIAU

(43) Date of publication of application: 29.10.2003
(73) Proprietor: Fajardo Sola, Pedro, 46930 Quart de Poblet, Valencia (ES)
(72) Inventor: Fajardo Sola, Pedro, 46930 Quart de Poblet, Valencia (ES)
(74) Representative: Chanza Jordan, Dionisio
(86) International application number: PCT/ES2001/000017
(87) International publication number: WO 2002/059057

(56) References cited:
- WO-A-98/55424
- ES-A- 8 607 892
- GB-A- 2 202 220
- US-A- 4 612 240

## Description

The invention protected by this Patent is a refractory material for cement industry kilns and the use thereof.

This material can be used to line the inside of cement industry kilns or placed in particular areas of the kiln with a view to refractory capacity.

The cement industry is familiar with the use of refractory materials to line the interior of the kilns used to manufacture the said product in order to withstand the high working temperatures, which can reach around 1500 degrees Celsius in some areas, and the resulting physical and chemical reactions. However, the differing compositions of the refractory materials also lead to their having differing degrees of hardness and resistance to the deformation that is caused by the differences in kiln temperature in different parts of the same kiln, among other factors. This invention achieves a refractory material of greater hardness and resistance than the materials hitherto employed.

Various refractory materials are currently known and used but they all present drawbacks, both operative and functional, particularly as regards progressive deformation by high kiln temperatures, spalling and cracking. Consequently, the use of the materials developed to date always presents certain limitations compared to the invention described herein, as a result of its technical and cost advantages. Already known refractory materials are the addition of glass-manufacture crucibles, lime, silica, chromium, magnetite, aluminium oxide and aluminous silica glass (F:H: Norton, Refractarios, first Spanish edition published by Blume in 1972), as well as Japanese patents no. JP11230679 concerning variations in porosity of refractory bricks, no. JP11130485 as prefabricated panels or no. JP11201649 as glass textures; in relation to the arrangement of shapes of the materials the outstanding examples are European patent no. EP0911594 and the German patent DE19729582 concerning prefabricated bricks. All of these are prior to the invention described herein but are generic and imprecise compared to the same, and are often designed for the steel industry; in all these inventions the resulting chemical composition or form are either not applied to the peculiarities of the cement industry or are not detailed and not sufficiently established compared to that described herein.

DIDIER-WERKE's Spanish patent n° ES-A-8607892 is also a related patent. It is well know to use andalusite and Silicon Carbide in the Spanish patent ES-A-8607892 (1984), but the Silicon Carbide only can be 1-15 wt% ( preferably 2 to 10 wt%), so this is a technical limitation. Andalusite is used in amounts of 10 wt% or greater.And always adding barium sulphate and calcium fluoride to obtain Celsian during firing. In cement kilns is necessary to use Silicon Carbide with greater amounts, so, in the present invention this technical problem is solved with the addition of clay.

This patent focuses its invention on a refractory material to be used in metal-melting furnaces, rather than cement kilns, and although its composition includes silicon carbide and andalusite, it does not contain clay. Its formulation is based on barium feldspar and a chemical bonding agent, which prevents the percentage of silicon carbide increasing by more than 15% by chemical incompatibility.

In conclusion, given that it is necessary to considerably increase percentages of silicon carbide if we wish to obtain high thermal shock, and high abrasion resistence and high chemical attack resistence, qualities vital for adequately safeguarding against the continuous aggressions that the refractory material is subjected to in the cement kilns; said increase in silicon carbide is only possible if clay is employed as a bonding-melting agent. These are the advantages demonstrated by the invention which is the subject of the patent application."

These deficiencies are overcome by the chemical composition of this invention, a neo-silicate such as Andalusite Al₂SiO₅, a crystalline solid such as silicon carbide SiC and a hydroaluminosilicate pelitic rock such as clay. This composition surpasses the above-mentioned limitations and increases the operational capacity and performance of the material, while its application presents certain features that significantly favour its use in cement industry kilns.

All the foregoing helps to achieve results as regards refractory quality, location within the kilns and resistance to alterations in shape wherever the invention is used (whether in geometrical configurations such as bricks or in formless configurations such as mortar) that already-known media do not provide.

The invention described herein combines certain chemical compounds for their physical properties: Andalusite Al₂SiO₅ for its low porosity, low thermal conductivity and refractory capacity, silicon carbide SiC for its resistance to oxidation and abrasion, while also being highly refractory, and clay for its plasticity.

This three-part combination of solid crystalline compounds formed from silicon carbide can be made up of different proportions by weight of each of its constituents in order to achieve a greater or lesser degree of thermal conductivity, according to the location and function of the refractory material in the different parts of the kiln.

In short, the result obtained by combining these components makes it possible to obtain a technical advantage with a product of greater hardness and greater resistance to the deformation caused by the heat inside cement-production kilns and the physical and chemical reactions that occur within the said kilns. This leads to considerable cost advantages as the new invention reduces the number of kiln stoppage cycles for maintenance and replacing worn material in each work period. As well as these technical and cost improvements, it also results in a production process advantage for the most widely and frequently found kilns, those of the rotary type, as it achieves greater resistance and hardness in the materials arranged inside the kiln to assist the circulation of the cement clinker being processed such as retainers and areas with shapes or in the satellite coolers, with staggered forms and elliptical inlets, respectively, and is consequently more efficient in maintaining their design and function.

For a better understanding of the above-mentioned general characteristics, drawings are attached hereto showing the following:

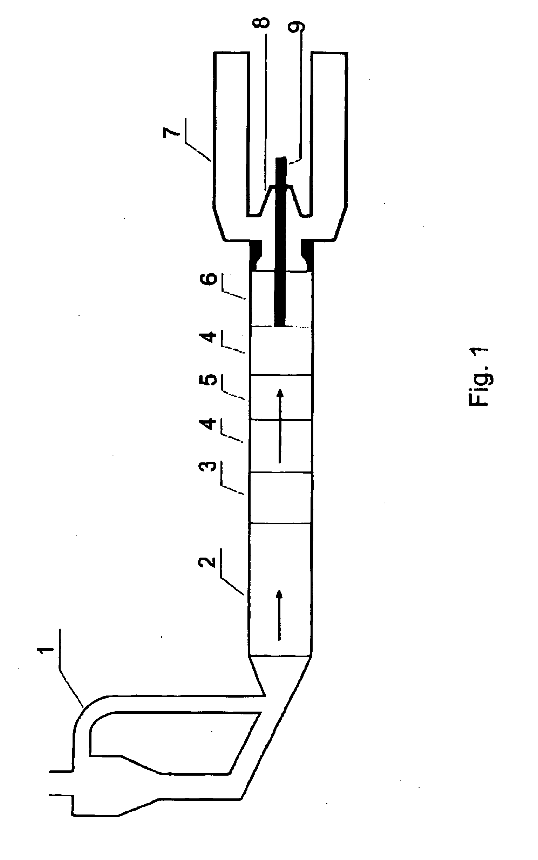

**Figure 1****:** Outline drawing of a rotary kiln with satellite coolers for the cement industry, in a configuration comprising a heat exchanger ( **1** ) and a calcination area ( **2** ), safety area ( **3** ), transition area ( **4** ), sintering area ( **5** ), outlet area ( **6** ), coolers ( **7** ), kiln head ( **8** ) and flame burner ( **9** ).

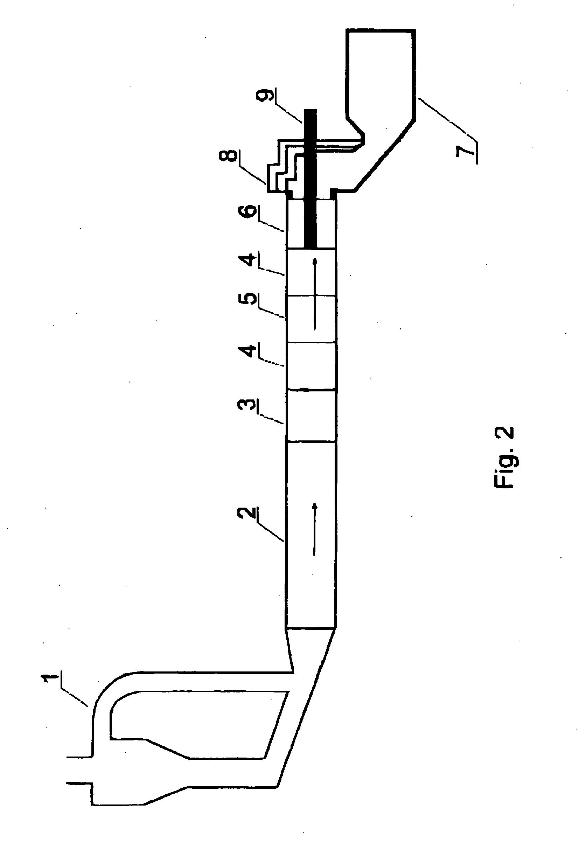

**Figure 2****:** Outline drawing of a rotary kiln with grate coolers for the cement industry, in a configuration comprising a heat exchanger ( **1** ) and a calcination area ( **2** ), safety area ( **3** ), transition area ( **4** ), sintering area ( **5** ), outlet area ( **6** ), coolers ( **7** ), kiln head ( **8** ) and flame burner ( **9** ).

The refractory material can be made up and placed as follows:

As regards the chemical components, a percentage by weight of andalusite Al₂SiO₅ equal or greater of 10%, a percentage by weight of Silicon Carbide SiC equal or greater of 10% and a percentage by weight of clay equal or greater of 5%, so that the different combinations of percentages add up to a total of 100%.

The preferable average composition is in the following proportions:

| | ***Percentage by weight*** |
|---|---|
| Andalusite Al₂SiO₅: | 55 % |
| Silicon Carbide SiC: | 35 % |
| Clay: | 10 % |

Given its cost advantages, kaolinite Al₂Si₂ O₅(OH)₄ can also be used instead of andalusite, in equal proportions.

As regards its location in the kilns, the areas where this refractory material is used are: the calcination area ( **2** ), the safety area ( **3** ), the transition area ( **4** ), the kiln outlet ( **6** ) and the coolers ( **7** ).

## Claims

1. Refractory material for cement industry kilns with resistance to thermal, physical and chemical deformation, **characterised by** a chemical composition containing a percentage by weight of andalusite Al₂SiO₅ of 10-80%, a percentage by weight of silicon carbide SiC of 10-80% and a percentage by weight of clay of 10-15%.

2. Refractory material for cement industry kilns with resistance to thermal, physical and chemical deformation, **characterised by** a chemical composition containing a percentage by weight of kaolinite Al₂Si₂O₅(OH)₄ of 10-80%, a percentage by weight of silicon carbide SiC of 10-80% and a percentage by weight of clay of 10-15%.

3. Use of the refractory material as claimed under Claim 1 or claim 2, **characterised by** the use thereof to line the inside of cement industry kilns in the calcination areas ( **2** ), in the safety area ( **3** ), in the outlet area ( **6** ) and in the coolers ( **7** ).

## Patentansprüche

1. Feuerfestes Material für Öfen der Zementindustrie, das beständig gegen thermische, physikalische und chemische Verformung ist und sich durch eine chemische Zusammensetzung mit einem Inhalt folgender Gewichtsprozentsätze **auszeichnet:** 10-80% Andalusit Al2SiO5, 10-80% Siliziumkarbid SiC und 10-15% Ton.

2. Feuerfestes Material für Öfen der Zementindustrie, das beständig gegen thermische, physikalische und chemische Verformung ist und sich durch eine chemische Zusammensetzung mit einem Inhalt folgender Gewichtsprozentsätze **auszeichnet:** 10-80% Kaolinit Al2Si2O5(OH)4, 10-80% Siliziumkarbid SiC und 10-15% Ton.

3. Benutzung von feuerfestem Material gemäß Anforderung 1 oder 2 zur Auskleidung der Innenseite von Öfen der Zementindustrie im Kalzinierungs- **(2),** Sicherheit- **(3),** Materialausstoß-**(6)** und Kühlungsbereich **(7).**

## Revendications

1. Matériel réfractaire pour les fours de l'industrie du ciment, résistant à la déformation thermique, physique et chimique, **caractérisé par** une composition chimique comprenant un pourcentage en poids d'andalousite Al₂SiO₅ de 10-80%, un pourcentage en poids de carbure de silicium SiC de 10-80%, et un pourcentage en poids d'argile de 10-15%.

2. Matériel réfractaire pour les fours de l'industrie du ciment, résistant à la déformation thermique, physique et chimique, **caractérisé par** une composition chimique comprenant un pourcentage en poids de kaolinite Al₂Si₂O₅(OH)₄ de 10-80%, un pourcentage en poids de carbure de silicium SiC de 10-80%, et un pourcentage en poids d'argile de 10-15%.

3. Utilisation du matériel réfractaire tel que revendiqué dans la Revendication 1 ou dans la Revendication 2, **caractérisée par** l'utilisation de ce matériel pour revêtir la partie intérieure des fours de l'industrie du ciment dans les zones de calcination **(2),** dans la zone de sécurité **(3),** dans la zone de sortie **(6)** et dans les refroidisseurs **(7).**
